# EUROPEAN PATENT APPLICATION

(11) **EP 4 699 953 A1**
(43) Date of publication of application: **25.02.2026**
(21) Application number: 25185703.3
(22) Date of filing: 26.06.2025
(51) Int. Cl.: B65D 88/12, B64U 10/25, B64U 80/50, B64U 80/70, B65D 90/00

(54) **TRANSPORT AND STORAGE CONTAINER AND METHOD FOR UNLOADING A TRANSPORT AND STORAGE CONTAINER**

(30) Priority: 19.08.2024 DE 102024123536
(71) Applicant: Airbus Defence and Space GmbH, 82024 Taufkirchen (DE)
(72) Inventor: NAPP, Christian, 82024 Taufkirchen (DE); THIEDIG, Jens, 82024 Taufkirchen (DE); FISLAGE, Tobias, 82024 Taufkirchen (DE)
(74) Representative: Isarpatent

(57) **Abstract**

The invention relates to a transport and storage container (100), comprising a container base surface (101) for holding cargo, end walls (104) and side walls (105) which surround the container base surface (101), and a container roof (106) which closes off the transport and storage container (100) at the top and is arranged spaced apart from and parallel to the container base surface (101), wherein at least one side wall (105) has an unloading door (109a, b) and at least one arrangement point for further cargo is provided on a door surface of the unloading door (109a, b) that faces a container interior (112), to a method for unloading the transport and storage container (100), and to an arrangement comprising at least two transport and storage containers (100).

## Description

The present invention relates to a transport and storage container, and to a method for unloading a transport and storage container.

The present invention and the problems on which it is based are explained in detail in terms of aircraft or aircraft parts, although it can be used in many sectors. The described devices and the method can, however, also be used for parts of stationary installations, of vehicles in all transportation sectors (but not only there), for example for road vehicles, for rail vehicles or for watercraft.

Particularly in the case of unmanned aircraft, it is customary to provide a storage and transportation facility for the disassembled aircraft. This is intended to make it possible to transport the aircraft in various ways, for example by road, sea or air, to the intended site of use and to assemble it there. Known solutions provide, for example, storage boxes with removeable covers for this purpose. However, on account of the size of the stored components, the cover has to be very large and have several heavy-duty locks in order to ensure a secure connection between the cover and the base plate or a bottom box. Loading and unloading of the storage box in manner optimized in respect of assembly order can likewise be realized only with difficulty. Other solutions propose storage racks, which are accommodated in containers, for holding the individual parts, which can then be pushed out of the containers. However, with this solution, there has to be enough space outside the container to allow complete unloading, this not being possible at all sites of use.

Against this background, the object of the present invention is to provide a transport and storage container and a method for unloading such a transport and storage container which allow optimum utilization of the space in the container and space-saving unloading.

This object is achieved by a transport and storage container having the features of independent claim 1 and a method for unloading a transport and storage container having the features of independent claim 12.

According to a first aspect of the invention, the transport and storage container comprises a container base surface for holding cargo, end walls and side walls which surround the container base surface, and a container roof which closes off the container at the top and is arranged spaced apart from and parallel to the container base surface. In this case, at least one side wall has an unloading door, at least one arrangement point for further cargo being provided on a door surface of the unloading door that faces the inside of the container. This has the advantage that more efficient use of the space in the container is possible and access to the cargo is made easier owing to the arrangement points for cargo that are provided on the unloading door. Separate loading racks and the securing means required for this purpose can advantageously be dispensed with.

A further aspect of the invention lies in a method for unloading a transport and storage container. Here, the method comprises: lifting off a container roof and vertically lifting out a portion of the cargo held in the transport and storage container, moving the unloading door, which is arranged in the side wall, to an open position by pivoting the unloading door, and removing the cargo which is arranged on the door surface of the unloading door. This has the advantage that rapid and efficient unloading of the container, in particular with bulky or heavy cargo, is possible and unloading and assembly can be carried out in an extremely small space.

A further aspect of the invention lies in an arrangement comprising at least two transport and storage containers. This has the advantage that the logistics for and storage of large quantities of cargo is made easier. At the same time, cargo can be placed in the containers following structural logic, in particular of unmanned aircraft, as a result of which both the unloading process and the assembly process can be simplified and accelerated.

Advantageous embodiments and further developments can be found in the further dependent claims and in the description with reference to the figures.

According to a further aspect of the invention, the unloading door extends entirely or partly over the length of the side wall. This has the advantage that the transport and storage container can be equipped with an unloading door which is matched to the size of the individual items of cargo and makes it easier to load and unload relatively large or relatively bulky objects.

According to a further aspect of the invention, the unloading door is designed such that it can be pivoted from a closure position to an unloading position in the direction of the container base surface. This has the advantage that the transport and storage container can be opened in a space-saving manner, with simple and rapid access to the cargo secured to the unloading door being possible at the same time. Separate loading racks can therefore be dispensed with, as a result of which the utilization of the loading space in the interior of the container is optimized.

According to a further embodiment of the invention, the container roof is designed such that it can be removed or folded open. This has the advantage that vertical access to the container is possible and space-saving unloading can be carried out by lifting out the cargo vertically.

According to a further embodiment of the invention, at least one end wall is designed as a further unloading door, wherein the further unloading door is designed such that it can be pivoted from a closure position to an unloading position in the direction of the container base surface. This has the advantage that a further access option is provided which increases flexibility when loading and unloading the container.

According to a further embodiment of the invention, at least one actuator or damper which is arranged on the container roof and/or on the respective unloading doors and assists a pivoting movement, in particular a hydraulic damper or a damper provided with a gas pressure spring, is provided. This has the advantages that the actuator or damper assists the pivoting movement of the doors during opening and/or closing and thus makes operation easier, and also the ergonomics are improved. Without limiting the invention to this, the actuators used may be, for example, hydraulic or pneumatic cylinders or rotary or linear actuators with a manual or motorized drive which are able to pivot the unloading doors in a guided manner.

It goes without saying that the invention is not limited to the abovementioned actuators, but rather also includes other actuators which are not expressly mentioned here but are familiar to a person skilled in the art and can be equally used in the invention. The mixture of various actuators in one and the same device is likewise possible.

According to a further embodiment of the invention, in particular at least one further arrangement point for cargo is provided on a door surface of the further unloading door that faces the inside of the container. This has the advantage that more efficient use of the space in the container is possible and organization of the cargo is simplified.

According to a further embodiment of the invention, the transport and storage container comprises a storage rack which is arranged displaceably in particular in the direction of the end wall. This has the advantage that, owing to the displaceable storage rack, flexibility when arranging the cargo is increased and unloading is made easier. After the end-side unloading door is pivoted, the storage rack can be pushed onto the unloading door and the cargo can then be removed from the storage rack.

According to a further embodiment of the invention, a frame which encloses the container base surface and/or the container roof is provided. This has the advantage that the structural integrity and stability of the container is increased and the container can also be designed for receiving high loads.

According to a further embodiment of the invention, the end walls and/or side walls have a reinforcement. This has the advantage that the strength and robustness of the container with respect to external loading is increased and therefore the stability of the container is improved.

According to a further embodiment of the invention, a locking device is provided for the unloading doors. This has the advantage that loading reliability is improved and unauthorized access to the cargo is prevented.

According to a further embodiment of the invention, the method comprises moving the end-side further unloading door to an open position by pivoting the further unloading door and selectively displacing a storage rack onto the further unloading door for removing the cargo which is stored on the storage rack or removing the cargo which is arranged on the door surface of the further unloading door. This has the advantage that the container is matched to the cargo to be transported and flexibility and efficiency during unloading is increased in particular owing to the use of the displaceable storage rack.

According to a further embodiment of the invention, provision is made in the arrangement for the transport and storage container to be designed such that it can be stacked. This has the advantage that, particularly in the case of unmanned aircraft, an arrangement matched to the assembly sequence together with the smallest possible space requirement for assembly is possible.

The invention will be explained in more detail with reference to exemplary embodiments which are shown in the appended drawings, in which
- Fig. 1: shows a perspective view of the transport and storage container according to one embodiment of the invention;
- Fig. 2: shows a top view of the transport and storage container according to one embodiment of the invention; and
- Fig. 3: shows a perspective view of the transport and storage container according to one embodiment of the invention.

The accompanying drawings serve to provide a further understanding of the present invention and constitute a part of this description. The drawings illustrate the embodiments of the present invention and together with the description serve to explain the principles of the invention. Other embodiments of the present invention and many of the intended advantages of the present invention will become apparent when they are explained by reference to the detailed description. The elements in the drawings are not necessarily to scale relative to each other. In the figures, identical reference signs designate identical or functionally identical components, unless stated otherwise.

Although specific embodiments are illustrated and described, those skilled in the art will recognize that a large number of alternative and/or equivalent embodiments can be used instead of the specific embodiments illustrated and described, without thereby departing from the field of application of the present invention. In general, this application is intended cover all modifications or variations of the specific embodiments described herein.

In the figures, identical elements, features and components which have the same function and the same effect are provided with the same reference signs, unless stated otherwise.

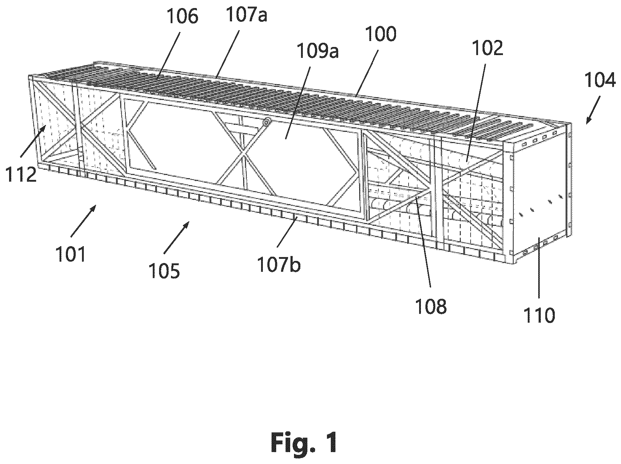

Fig. 1 shows a perspective view of the transport and storage container 100 according to one embodiment of the invention in the closed state. The transport and storage container 100 has a container base surface 101 on which the cargo, in the exemplary embodiment the fuselage 102 of an unmanned aircraft, is placed. The container base surface 101 is surrounded by two end walls 104 and two side walls 105, which delimit the container interior 112. The top side of the transport and storage container 100 is closed off by a container roof 106. A respective encircling frame 107a, b is provided both in the region of the container base surface 101 and also the container roof 106. The frames 107a, b stabilize the entire structure and are connected via reinforcing strut arrangements 108, which are in the form of a cross in the exemplary embodiment, in the side walls 105. An unloading door 109a, which is closed in the exemplary embodiment and extends across the side wall 105 but does not take up the entire width of the side wall 105, is arranged in the side wall 105 facing the viewer. The end wall 104 shown in Fig. 1 is designed as a further unloading door 110, which, like the lateral unloading door 109a, can be pivoted in the direction of the container base surface 101 in order to open the transport and storage container 100.

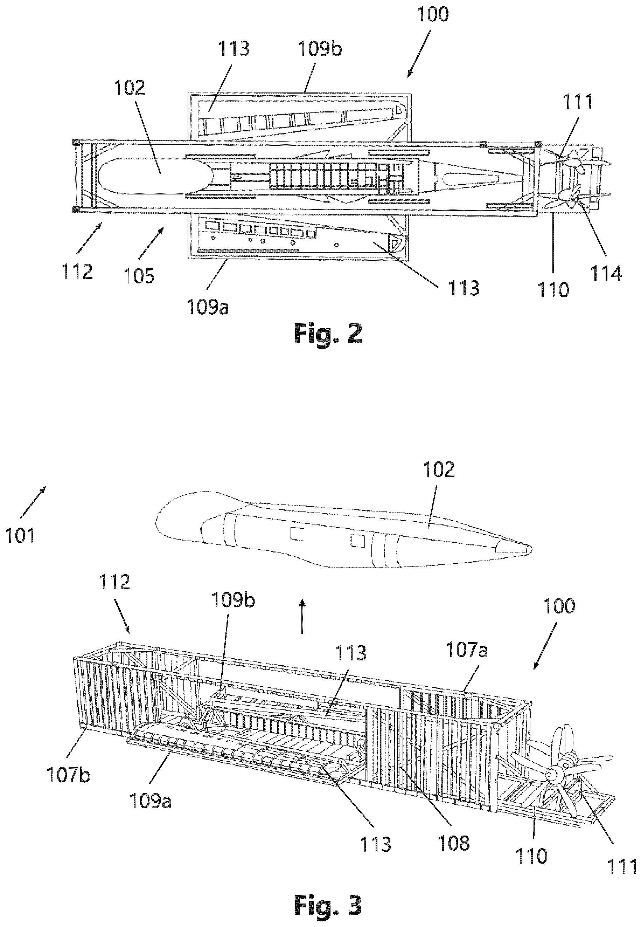

Fig. 2 shows a top view of the transport and storage container 100 according to one embodiment of the invention. In the exemplary embodiment, the transport and storage container 100 has a total of two unloading doors 109a, b which are provided in opposite longitudinal side walls 105 and in the illustration according to Fig. 2 are pivoted to an open position. A further unloading door 110 which is likewise pivoted and thus opened is likewise provided at the end side, a storage rack 111 previously kept in the container interior 112 and having propellers 114 arranged on it having been pushed onto the further unloading door in Fig. 2. The fuselage 102 of an unmanned aircraft is held in the container interior 112 in the non-assembled state. The two unloading doors 109a, b provided in the longitudinal side walls 105 provide arrangement points at which, in the exemplary embodiment of Fig. 2, the side wings 113 of the unmanned aircraft are fastened, for example screwed. After the lateral unloading doors 109a, b are pivoted, the side wings 113 are accessible and can be removed in a simple manner for assembly on the fuselage 102 from the unloading doors 109a, b. During transport, that is to say with lateral unloading doors 109a, b pivoted to a closed position, the design of the transport and storage container 100 according to the invention enables space-saving arrangement of the side wings 113, without separate storage racks having to be used for this purpose. Both storage and also transport and assembly of the unmanned aircraft are therefore substantially simplified. The total weight of the transport and storage container 100 can also be reduced by dispensing with separate storage racks for the individual components.

Fig. 3 shows a perspective view of the transport and storage container 100 during unloading. As already described in connection with Fig. 2, the lateral unloading doors 109a, b have been pivoted and moved to a horizontal position. Therefore, access to the side wings 113 which are fastened to the unloading doors 109a, b is possible. In the exemplary embodiment of Fig. 3, the container roof 106 has already been taken off the transport and storage container 100 and removed. The fuselage 102 has been lifted out of the container interior 112 vertically, for example with the aid of a crane not illustrated here, for assembly of the complete aircraft, and can then be positioned at an assembly site provided next to the transport and storage container 100. The side wings 113 can likewise be lifted out of the transport position on the unloading doors 109a, b with crane assistance and moved to the fuselage 102 in order to be connected to it. Owing to the possibility of lifting out components vertically, separate storage racks carrying the fuselage 102 can be dispensed with. Therefore, no storage space has to be provided in the horizontal extent of the transport and storage container 100. The transport and storage container 100 according to the invention therefore also allows placement of the transport and storage container 100 and assembly at the site of use with a limited space requirement. The end side of the transport and storage container 100 has a further unloading door 110, which has likewise been pivoted to a horizontal position and pushed onto a storage rack 111 in the exemplary embodiment of Fig. 3. The further unloading door 110 therefore provides a planar surface, which is independent of the condition of the underlying surface, for the storage rack 111 to be pushed onto.

In all of the abovementioned embodiments, the unloading doors 109a, b, 110 can be pivoted and also the container roof 106, which can be folded open in some embodiments, can be opened and closed via actuators, not illustrated. These actuators are fixed firstly to the unloading doors 109a, b, 110 and secondly to the container frame 107a, b and assist the pivoting movement. As an alternative or in addition to this, dampers, for example hydraulic dampers or dampers provided with a gas pressure spring, can also be attached, these preventing sudden opening of the unloading doors 109a, b, 110, and assisting the process of closing them again. It goes without saying that a container roof and/or unloading doors 109a, b, 110 without attached dampers or actuators are also conceivable.

Further components of the unmanned aircraft, such as vertical stabilizers and additional wings and pylons, can be provided in a further transport and storage container 100 not illustrated here but configured in the same way, that is to say having correspondingly pivotable unloading doors 109a, b, 110. The further components can be arranged and fastened on the unloading doors 109a, b, 110 in the same way. This allows rapid and simple removal for assembly at the site of use.

### List of reference signs

- 100: Transport and storage container
- 101: Container base surface
- 102: Fuselage
- 104: End wall
- 105: Side wall
- 106: Container roof
- 107a, b: Frame
- 108: Strut arrangement
- 109a, b: Unloading door
- 110: Further unloading door
- 111: Storage rack
- 112: Container interior
- 113: Side wing
- 114: Propeller

## Claims

1. Transport and storage container (100), comprising a container base surface (101) for holding cargo, end walls (104) and side walls (105) which surround the container base surface (101), and a container roof (106) which closes off the transport and storage container (100) at the top and is arranged spaced apart from and parallel to the container base surface (101), wherein at least one side wall (105) has an unloading door (109a, b) and at least one arrangement point for further cargo is provided on a door surface of the unloading door (109a, b) that faces a container interior (112).

2. Transport and storage container (100) according to Claim 1, wherein the unloading door (109a, b) extends entirely or partly over the length of the side wall (105).

3. Transport and storage container (100) according to either of the preceding claims, wherein the unloading door (109a, b) is designed such that it can be pivoted from a closure position to an unloading position in the direction of the container base surface (101).

4. Transport and storage container (100) according to any of the preceding claims, wherein the container roof (106) is designed such that it can be removed or folded open.

5. Transport and storage container (100) according to any of the preceding claims, wherein at least one end wall (104) is designed as a further unloading door (110), wherein the further unloading door (110) is designed such that it can be pivoted from a closure position to an unloading position in the direction of the container base surface (101).

6. Transport and storage container (100) according to any of Claims 3 to 5, wherein at least one actuator or damper which is arranged on the respective unloading doors (109a, b, 110) and/or the container roof (106) and assists a pivoting movement, in particular a hydraulic or pneumatic spring-assisted damper, is provided.

7. Transport and storage container (100) according to Claim 5, wherein in particular at least one further arrangement point for cargo is provided on a door surface of the further unloading door (110) that faces the container interior (112).

8. Transport and storage container (100) according to any of the preceding claims, further comprising a storage rack (111) which is arranged displaceably in particular in the direction of the end wall (104).

9. Transport and storage container (100) according to any of the preceding claims, wherein a frame (107a, b) which encloses the container base surface (101) and/or the container roof (106) is provided.

10. Transport and storage container (100) according to any of the preceding claims, wherein the end walls (104) and/or side walls (105) have a reinforcement.

11. Transport and storage container (100) according to any of the preceding claims, wherein a locking device is provided for the unloading doors (109a, b, 110).

12. Method for unloading a transport and storage container (100) according to any of Claims 1 to 11, comprising:
- lifting off a container roof (106) and vertically lifting out a portion of the cargo held in the transport and storage container (100),
- moving the unloading door (109a, b), which is arranged in the side wall (105), to an open position by pivoting the unloading door (109a, b), and
- removing the cargo which is arranged on the door surface of the unloading door (109a, b).

13. Method according to Claim 12, further comprising:
- moving the end-side further unloading door (110) to an open position by pivoting the further unloading door (110) and selectively
- displacing a storage rack (111) onto the further unloading door (110) for removing the cargo which is stored on the storage rack (111) or
- removing the cargo which is arranged on the door surface of the further unloading door (110).

14. Arrangement comprising at least two transport and storage containers (100) according to any of Claims 1 to 11.

15. Arrangement according to Claim 14, wherein the transport and storage container (100) is designed such that it can be stacked.
